# EUROPÄISCHE PATENTSCHRIFT

(11) **EP 4 347 453 B1**
(45) Veröffentlichungstag und Bekanntmachung des Hinweises auf die Patenterteilung: **21.01.2026**
(21) Anmeldenummer: 22730143.9
(22) Anmeldetag: 18.05.2022
(51) Int. Cl.: B65G 47/04, B07C 1/00

(54) **SORTIERSYSTEM UND EIN VERFAHREN ZU DESSEN BETRIEB**
SORTING SYSTEM AND METHOD FOR OPERATING SAME
SYSTÈME DE TRI ET PROCÉDÉ POUR LE FAIRE FONCTIONNER

(30) Priorität: 28.05.2021 DE 102021113886
(43) Veröffentlichungstag der Anmeldung: 10.04.2024
(73) Patentinhaber: Dematic GmbH, 63150 Heusenstamm (DE)
(72) Erfinder: MEURER, Hans Christoph, 55234 Framersheim (DE)
(74) Vertreter: Moser Götze & Partner Patentanwälte mbB
(86) Internationale Anmeldenummer: PCT/EP2022/063431
(87) Internationale Veröffentlichungsnummer: WO 2022/248306

(56) Entgegenhaltungen:
- US-A- 5 699 891
- THOMAS STÖHR: "Steigerung der Energieeffizienz von Stückgutstetigförderern durch optimierte Antriebssystemauswahl", 31 December 2019 (2019-12-31), pages 1 - 222, XP055955368, Retrieved from the Internet <URL:https://diglib.tugraz.at/download.php?id=5cc6a9bb2f329&location=browse> [retrieved on 20220826]
- JODIN DIRK ET AL: "Sortier- und Verteilsysteme Grundlagen, Aufbau, Berechnung und Realisierung", 31 December 2012 (2012-12-31), pages 1 - 19, XP055955404, ISBN: 978-3-642-31289-2, Retrieved from the Internet <URL:HTTP://springer.com/978-3-642-31289-2> [retrieved on 20220826]

## Beschreibung

Die Erfindung betrifft ein Sortiersystem und ein Verfahren zu dessen Betrieb nach Anspruch 1 bzw. 5.

Sortiersysteme stellen eine wesentliche Komponente in Verteilzentren, Warenlagern oder ganz generell in der interbetrieblichen Logistik dar. Sie ermöglichen bereits jetzt schon hohe Durchsätze trotz eines großen Spektrums an unterschiedlich handzuhabenden Artikeln.

Insbesondere sogenannte Schuhsorter (im Englischen "shoe sorter") ermöglichen eine Hochgeschwindigkeitssortierung von Artikeln. Insbesondere eignen sich diese für relativ gleichförmige, rechteckige Artikel oder Kartons etc., da diese nicht zum Umfallen bzw. Kippen neigen. Aufgrund der auftretenden Beschleunigungs- und Abbremsungskräfte kann es allerdings trotzdem zum Umkippen der geförderten Artikel bzw. Gegenstände kommen.

Daher müssen die Sorter die Gegenstände so langsam manipulieren, dass die auftretenden Beschleunigungskräfte nicht zum Umfallen führen. Dies bedingt jedoch eine Durchsatzverminderung, insbesondere dann, wenn ein großes Produktspektrum unterschiedlichster Gegenstände gehandhabt wird, da z. B. der Artikel mit der größten Neigung zum Umfallen die minimale Geschwindigkeit der Handhabung aller gleichzeitig auf derselben Fördererstrecke des Sorters befindlichen Gegenstände definiert.

Solche "shoe" Sorter sind z. B. aus der US 7,562,761 B2 oder EP 2 470 459 B1 bekannt. WO 2016/010766 A1 beschreibt die Verwendung von Zuführungen und deren Ansteuerung.

Die Veröffentlichungen Thomas Stöhr "Steigerung der Energieeffizienz von Stückgutstetigförderern durch optimierte Antriebssystemauswahl", 31. Dezember 2019 (2019-12-31), Seiten 1-222, XP055955368, und Jodin Dirk et al. "Sortier- und Verteilsysteme Grundlagen, Aufbau, Berechnung und Realisierung", 31. Dezember 2012 (2012-12-31), Seiten 1-19, XP055955404, ISBN: 978-3-642-31289-2, offenbaren Sortiersysteme umfassend eine zentrale Steuerung, eine Sortierstrecke mit variabel steuerbarer Fördergeschwindigkeit, mindestens zwei Zuführstrecken auf den Einlauf in die Sortierstrecke und eine Überwachungseinrichtung im Einlauf.

US 5,699,891 A offenbart eine Vorrichtung zum Umsetzen von Werkstückträgern von einem Förderweg auf einen weiteren Förderweg. Die Vorrichtung weist eine in einer Übergabezone angeordnete Hubeinrichtung für den Werkstückträger auf, mit der der Werkstückträger von der zuführenden Förderbahn auf die weitere Förderbahn überführt werden kann. Die weitere Förderstrecke weist mindestens einen Transport auf, dessen Zugtrum durch die Hubeinrichtung von der ersten Stelle zu einer zweiten Stelle angehoben und später abgesenkt werden kann, so dass das Zugtrum des Transportbandes als Auflage für den Werkstückträger dienen kann. Am Ende eines Transportabschnittes der weiteren Förderstrecke ist in der Transportzone mindestens eine ein Transportband umlenkende Hub-Umlenkeinrichtung angeordnet, die das jeweilige Transportband von der ersten Ebene auf die zweite Ebene im wesentlichen um den gleichen Betrag anheben und absenken kann wie die Hubeinrichtung desselben Transportbandes.

Demgegenüber besteht die Aufgabe der vorliegenden Erfindung darin, ein Sortiersystem bzw. ein Verfahren zu dessen Betrieb bereitzustellen, das demgegenüber einen höheren Durchsatz erlauben.

Diese Aufgabe wird durch das in Anspruch 1 wiedergegebene Sortiersystem bzw. dem Verfahren nach Anspruch 5 gelöst. Vorteilhafte Ausgestaltungen ergeben sich aus den Unteransprüchen und der Beschreibung.

Erfindungsgemäß ist erkannt worden, dass, wenn einlaufende Artikel detektiert und von der zentralen Steuerung zu dem detektierten Artikel eine hinterlegte Geschwindigkeit zur Steuerung der Fördergeschwindigkeit der Sortierstrecke abgefragt wird, es möglich wird, diese Artikel gezielt mir einer zu ihnen passenden Fördergeschwindigkeit zu transportieren und somit den Durchsatz zu optimieren.

Die passende Fördergeschwindigkeit auf der Sortierstrecke wird vorzugsweise anhand des Artikels selbst ermittelt und in einer Datenbank des zentralen Steuersystems (WMS) hinterlegt. Dies kann z. B. für jeden mit gleicher EAN-kodierten Artikel einmalig im Rahmen eines Teach-In Prozesses stattfinden. Die jeweils relevanten Produkteigenschaften können auch bereits in der Datenbank vorhanden sein.

Insbesondere wird als Maß für eine mögliche Fördergeschwindigkeit die Kippstabilität eines Artikels bei einer entsprechenden Geschwindigkeit verwendet. Die Kippstabilität spielt auch bei der Bestimmung und Vorgabe möglicher Beschleunigungswerte, um die Geschwindigkeit zu erreichen, eine Rolle. Als Maßstab für die Kippstabilität kann der Kippwinkel herangezogen werden, ab dem ein Artikel umkippt bzw. der Winkel ab dem der Kipppunkt überschritten wird. Je größer der Kippwinkel desto stabiler der Artikel. Die Kippstabilität kann auch empirisch ermittelt werden, z. B. auf der Anlage selbst oder in einer geeigneten Test-Vorrichtung, die die Handhabung auf einem Sorter (z. B. Shoe Sorter) simuliert. Die Kippstabilität kann auch rechnerisch bestimmt werden anhand der bekannten Abmessungen der Artikel und Schwerpunktangaben.

Neben der Kippstabilität können auch andere Artikeleigenschaften für die Fördergeschwindigkeitssteuerung herangezogen werden, wie Zerbrechlichkeit, Oberflächenbeschaffenheit, Reibwerte, Integrität und Stabilität der Verpackung, d. h. der Inhalt der Verpackung kann herausfallen oder herausragen, die Verpackung kann beschädigt werden, Klebeverbindungen lösen sich, Klappen stehen heraus, die Verpackung kann ihre Form verändern. Auch diese Eigenschaften können analog oben auf der Anlage selbst oder in einer geeigneten Test-Vorrichtung, die die Handhabung auf einem Shoe-Sorter simuliert, empirisch ermittelt werden.

Es werden also Artikel gruppiert auf die Sortierstrecke eingeschleust, die eine sehr ähnliche oder identische maximal Fördergeschwindigkeit aufweisen, die sich aus den Artikeleigenschaften ergibt. Es werden dazu in der zentralen Steuerung bzw. Datenbank Fördergeschwindigkeitsgruppen hinterlegt, in die jeder Artikel eingruppiert wird.

So ist es z. B. erkannt worden, dass die zum Umfallen neigenden Gegenstände wenige Prozent des Gesamtinventars (z. B. lediglich 1 bis 2 %) ausmachen, das täglich über eine Sortierstrecke befördert wird, so dass bei einer gruppierten gemeinsamen Handhabung dieser beispielsweise zum Umfallen neigenden Gegenstände, es möglich ist, die Geschwindigkeit der Sortierstrecke des Sortiersystems nur während dieser Handhabung herabzusetzen und ansonsten mit höherer Geschwindigkeit zu betreiben. Hiermit lassen sich Geschwindigkeitssteigerungen in erheblichem Ausmaß erreichen.

Die Begriffe Artikel bzw. Gegenstände umfassen z. B. Einzelartikel, Gebinde etc.

Vorzugsweise weist die Sortierstrecke mehrere unabhängig voneinander hinsichtlich Fördergeschwindigkeit steuerbare Sortierabschnitte auf. Dies erlaubt es, die Fördergeschwindigkeit pro Abschnitt maßgeschneidert für eine jeweilige Gruppe zu regeln und nicht erst zu ändern, wenn alle Artikel einer vorherigen oder nachfolgenden Gruppe mit anderer Fördergeschwindigkeitsvorgabe die gesamte Sortierstrecke passiert haben.

Wenn die Zuführstrecken mit einem Nachschublager verbunden sind, von dem aus die Zuführstrecken mit Artikeln gleicher oder ähnlicher Fördergeschwindigkeit gruppiert versorgt werden, kann bereits beim Bereitstellen von Artikeln eine Gruppierung, also in einem frühen Zeitpunkt, erfolgen.

Die Erfindung betrifft auch ein entsprechendes Verfahren zum Betreiben eines Sortiersystems mit einer Sortierstrecke, die eine über eine zentrale Steuerung variabel steuerbare Fördergeschwindigkeit aufweist, und mit einer Überwachungseinrichtung für die Sortierstrecke ausgestaltet ist, wobei die Überwachungseinrichtung vor der Sortierstrecke angeordnet ist und einlaufende Artikel detektiert, und die Überwachungseinrichtung das Ergebnis mit der zentralen Steuerung teilt und diese z. B. je nach detektiertem Artikel die Fördergeschwindigkeit der Sortierstrecke auf eine solche Geschwindigkeit regelt, dass der jeweilige Artikel mit dieser Geschwindigkeit transportiert wird, solange er sich auf der Sortierstrecke befindet.

Mit anderen Worten, die in der zentralen Steuerung hinterlegte Fördergeschwindigkeit wird zur Steuerung der Fördergeschwindigkeit der Sortierstrecke auf eine solche Fördergeschwindigkeit verwendet, während sich der Artikel darauf befindet.

Wenn die Überwachungseinrichtung vor der Sortierstrecke angeordnet ist und einlaufende Artikel detektiert, und die Überwachungseinrichtung das Ergebnis mit der zentralen Steuerung austauscht und diese je nach detektiertem Artikel eine in der zentralen Steuerung hinterlegte Fördergeschwindigkeit zur Steuerung der Fördergeschwindigkeit der Sortierstrecke auf eine solche Fördergeschwindigkeit verwendet, während sich der Artikel darauf befindet, kann die Fördergeschwindigkeit artikeloptimiert eingestellt werden.

Sinnvollerweise werden Artikel mit ähnlicher oder gleicher hinterlegter Fördergeschwindigkeit gruppiert auf die Sortierstrecke eingeschleust, so dass Pulks oder Züge aus Artikeln mit ähnlicher oder gleicher Geschwindigkeitseinstufung zusammen auf der Sortierstrecke befördert werden, um Geschwindigkeitsvorteile zu erreichen.

Es ist daher auch möglich, bereits die Zuführstrecken in die Steuerung der Fördergeschwindigkeit einzubeziehen. Dies ist insbesondere von Vorteil, um Rückstaus zu vermeiden.

Zur Bestimmung der Fördergeschwindigkeit können Produkteigenschaften der Artikel, wie Zerbrechlichkeit, Oberflächenbeschaffenheit, Reibwerte, Integrität und Stabilität der Verpackung und Kippstabilität, herangezogen werden. Besonders bevorzugt ist die Verwendung der Kippstabilität (vgl. oben).

Bevorzugt ist es, die Artikel vor dem Einlauf in die Sortierstrecke in Fördergeschwindigkeitsgruppen zu sortieren.

Besonders bevorzugt ist es, wenn Fördergeschwindigkeitsgruppen bereits beim Bereitstellen von Artikeln aus einem Nachschublager berücksichtigt werden.

Große Durchsatzvorteile können erreicht werden, wenn mehr Artikel einer Fördergeschwindigkeitsgruppe aus dem Nachschublager bereitgestellt werden, als im Mittel benötigt werden, da somit diese Artikel mit ggf. langsameren Fördergeschwindigkeiten nur einmal oder weniger oft über die Sortierstrecke bewegt werden müssen und diese daher weniger "blockieren" bzw. verlangsamen.

Eine weitere Optimierung über die Zeit kann erreicht werden, wenn z. B. gleichzeitig mehr Artikel einer Kippstabilitätsgruppe aus dem Nachschublager bereitgestellt werden, als im Mittel benötigt.

Mit anderen Worten, es werden mehr Artikel einer Gruppe als zu einer bestimmten Zeit nötig gleichzeitig gruppiert nachgeschoben, da solche Artikel später z. B. im Tagesverlauf benötigt werden und die Gruppierung somit nur einmal erfolgen muss. Um solche "überschüssigen" Artikel zu puffern bzw. Zwischenzuspeichern, kann am Ausgang der Sortierstrecke ein gesondertes Zwischenlager oder auch ein größeres ohnehin vorgesehenes Zwischenlager angeordnet werden.

Vorzugsweise wird bei der Belegung von Zuführstrecken berücksichtigt, dass möglichst Artikel gleicher Fördergeschwindigkeitsgruppen sich auf derselben Zuführstrecke befinden. Besonders bevorzugt ist es, wenn möglichst gleiche Kippstabilitätsgruppen sich auf derselben Zuführstrecke befinden.

Vorzugsweise handelt es sich bei der Sortierstrecke um einen Schuhsorter bzw. einen Shoe Sorter mit einer zentralen linearen Sortierstrecke und mit einer Mehrzahl von Zuführstrecken und einer Mehrzahl von Ausschleusungen.

Es ist möglich, die Steuerung der Fördergeschwindigkeit der Sortierstrecke auch auf die Ausschleusungen und die daran anschließenden Förderstrecken zu erweitern, so dass in diesen kein Rückstau produziert wird.

Die Sortierstrecke selbst kann solange bezüglich eines Artikels bzw. eines Pulks von Artikeln mit der entsprechenden Fördergeschwindigkeit gesteuert werden, bis diese rechnerisch die Sortierstrecke insgesamt verlassen haben müssen. Denkbar ist auch eine sensorgestützte Überwachung (z. B. der Ausschleusungen), um zu ermitteln, dass tatsächlich alle Artikel die Sortierstrecke verlassen haben, um die Fördergeschwindigkeit zeitlich noch optimierter anpassen zu können. So kann die Fördergeschwindigkeit früher verändert werden, wenn z. B. alle Artikel eines Pulks die Sortierstrecke bereits am Anfang durch Ausschleusen verlassen haben.

Auch ist eine Aufteilung der Sortierstrecke in einzelne hinsichtlich Geschwindigkeit regelbare Teilstrecken möglich, so dass diese bereits nach Verlassen der Artikel gesondert in der Fördergeschwindigkeit veränderbar sind.

Die Erfindung kann auch im Rahmen eines Materialhandhabungssystems eingesetzt werden, wie z. B. ein Distributionszentrum oder Verteillager usw., das mit einem Packstückpuffer, mit einem automatischen Palettierer zum Beladen eines Lademittels mit Packstücken in einem Lademuster basierend auf einem Packstücke umfassenden Auftrag, mit einer Steuerung, die mit einem Lademustergenerator programmiert ist, um ein Lademuster zu bestimmen und Befehle für den automatischen Palettierer zu generieren, um die Packstücke gemäß dem Lademuster auf das Lademittel zu platzieren, wobei das Lademuster, das eine vorgegebene Mindest-Stabilität des Packstücks oder der Gruppe von Packstücken erfüllt, ausgewählt wird, und mit einem mit der Steuerung wirkverbundenen Packstücktransportmittel zum sequenzierten Transport der Packstücke vom Packstückpuffer zu dem automatischen Palettierer zum Beladen des Lademittels anhand des ausgewählten Lademusters, versehen ist.

Dabei kann das Sortiersystem zwischen Nachschublager und Packstückpuffer angeordnet sein. Vorzugsweise ist das Sortiersystem dann ein linearer Sorter, wie z. B. ein Schuhsorter, der aus dem Nachschublager über mehrere Zuführungen gespeist wird und der über mehrere Ausschleusungen ein Zwischenlager, insbesondere ein Mehrgassen- und Mehrebenen-Regallager mit Einebenen-Regalbediengeräten speist.

Dann bietet es sich besonders an, eine "Fütterung" (Versorgung) des Zwischenlagers mit mehr Nachschub als nötig im zeitlichen Mittel zur Optimierung der Sortierstreckenbelegung hinsichtlich Geschwindigkeit durchzuführen (vgl. oben). Insbesondere trifft dies für Artikel zu, die hinsichtlich Kippstabilität eine langsame Geschwindigkeit erfordern, da diese sonst das gesamte System ständig verlangsamen.

Es kann sinnvoll sein, mehrere Zuführungen zu Gruppieren und diese auf zentrale Zuführungen einlaufen zulassen, die wiederum auf die Sortierstrecke selbst münden. Mehrere Zuführungen können im Reißverschlussprinzip verwendet werden, um Artikel mit ähnlichen Fördereigenschaften von benachbarten Zuführungen "gemeinsam" einzuschleusen.

Das System kann mit verpackten und unverpackten Artikeln und auch mit Artikeln in oder auf Ladehilfsmitteln wie Tablaren oder Behältern verwendet werden.

Bei Verwendung von Tablaren, erfolgt beim Platzieren der Artikel auf dem Tablar vorzugsweise dann eine Vorpositionierung der Artikel mittig oder an abgewandter Seite des Schuh-Angriffs, so dass die Artikel weniger zum Kippen neigen und wenn dann auf dem Tablar umkippen und nicht herunterfallen.

Weitere Details der Erfindung ergeben sich aus der nachfolgenden Beschreibung von Ausführungsbeispielen anhand der Zeichnung, in der
- Fig. 1: eine Erläuterung der Kippstabilitätsbestimmung über den Kippwinkel;
- Fig. 2: eine schematische Blockansicht eines erfindungsgemäßen Sortiersystems in einem Nachschublager;
- Fig. 3: eine schematische perspektivische Ansicht eines Ausschnitts aus Figur 2, und
- Fig. 4: ein Flussdiagramm des Betriebs zeigen.

Es wird einführend und beispielhaft zunächst auf die verwendete Produkteigenschaft Kippstabilität der Artikel eingegangen.

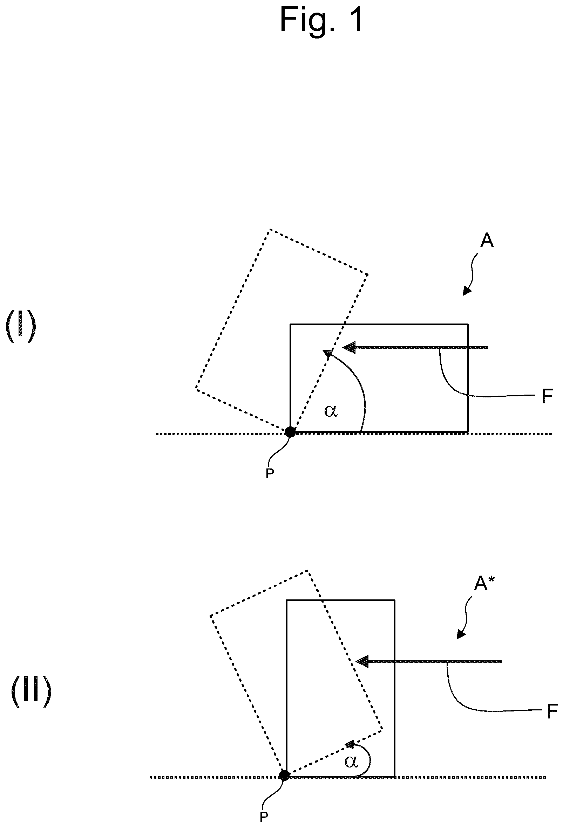

Dazu wird unter Hinweis auf Figur 1 zunächst ein Artikel A (Beispiel I) betrachtet. Dieser Artikel ist breiter als hoch und liegt somit "flach" mit niedrigem Schwerpunkt auf einem Förderer (angedeutet durch punktierte Linie F) auf.

Um diesen Artikel um einen Kipppunkt P zum Umkippen zu bewegen, muss der Artikel A sich um den Kipppunkt P um einen relativ großen Kippwinkel α drehen, bis der Schwerpunkt entsprechend weit über den Kipppunkt P hinaus verlagert ist.

Artikel A* im Beispiel (II) ist dagegen höher als breit und weist einen höher gelegenen Schwerpunkt auf, wenn er auf einem Förderer (angedeutet durch punktierte Linie F) aufliegt.

Um diesen Artikel A* um den Kipppunkt P zum Umkippen zu bewegen, muss der Artikel A* sich um den Kipppunkt P um einen relativ kleinen Kippwinkel α drehen (ca. 30 - 45 Grad).

Um den jeweiligen Artikel in den entsprechenden Kippwinkel zu verlagern ist eine bestimmte Kraft F nötig, die u. a. wesentlich aus der positiven bzw. negativen Beschleunigung beeinflusst wird und mit der Fördergeschwindigkeit direkt zusammenhängt.

Man erkennt, dass der Kippwinkel dazu geeignet ist, die Artikel hinsichtlich Kippstabilität und somit Fördergeschwindigkeit einzustufen.

Im Teach-In Prozess wird analog jeder EAN-kodierte Artikel um den entsprechenden Kipppunkt P so weit gedreht bis er kippt und der ermittelte Winkel als Kippwinkel α angenommen.

Der in dem Teach-In Prozess so ermittelte Kippwinkel α wird in einer Datenbank gespeichert, die der zentralen Steuerung im Zugriff ist.

Die Gruppierung hinsichtlich Fördergeschwindigkeit basiert auf dem so bestimmten Kippwinkel α.

Die Steuerung in dem nachfolgend beschriebenen System ist entsprechend eingerichtet, solche Kippstabilitätswerte für jeden Artikel bzw. EAN-kodierten Artikel in einer Datenbank zu speichern und in Fördergeschwindigkeiten der Artikel umzurechnen bzw. die Artikel anhand dessen in Gruppen einzuteilen. So kann es sinnvoll sein, 3 bis 5 Fördergeschwindigkeitsgruppen zu bilden, um die Steuerung zu vereinfachen.

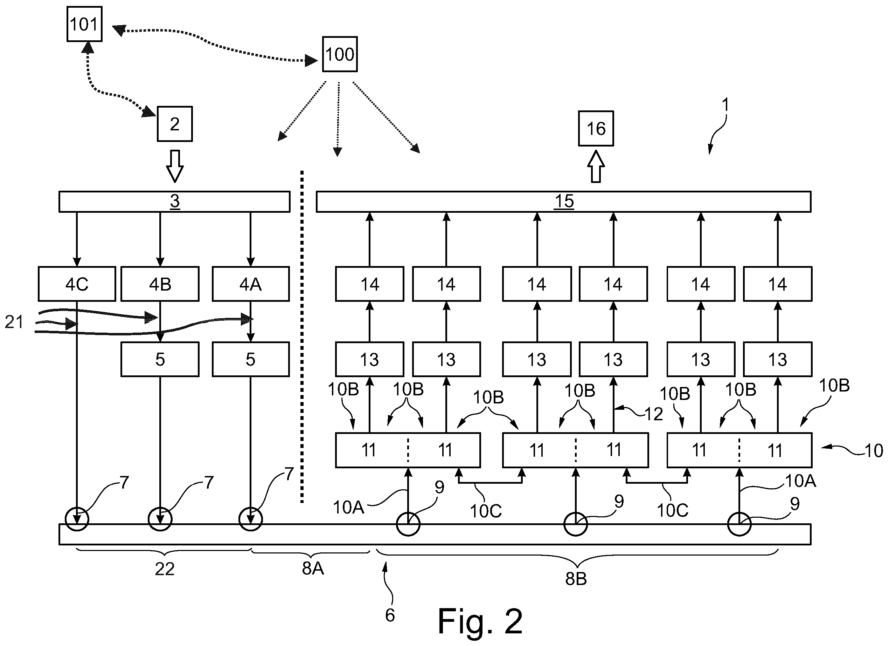

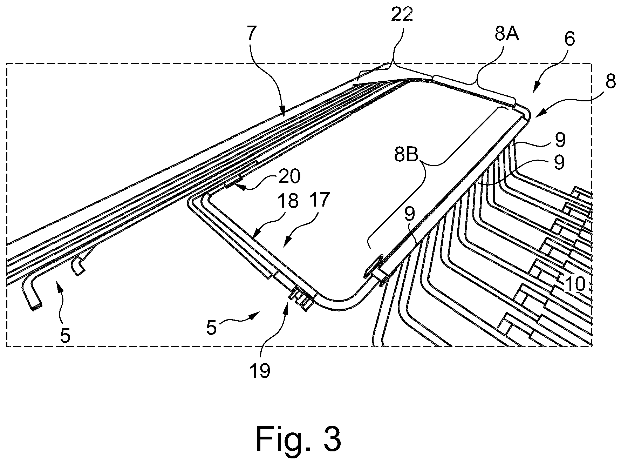

Figuren 2 und 3 zeigen ein Distributionszentrum 1 mit einer solchen übergeordneten Steuerung 100, die mit den Fördergeschwindigkeitsgruppen für jeden Artikel bzw. EAN-kodierten Artikel gespeist wird und diese Werte in einer Datenbank speichert und in Fördergeschwindigkeiten der Artikel umrechnet bzw. die Artikel anhand dessen in Gruppen einteilt.

Die Daten werden in einem Teach-In Prozess 101 erhoben, in dem manuell anhand standardisierter Vorgaben mit technischer Unterstützung wiederholbar Kippstabilitätswerte für die Artikel bestimmt werden (vgl. oben).

Das System 1 dient der Auftragserfüllung (zur Verteilung) einschließlich des automatisierten Stapelns von gemischten Artikeln auf einem Träger (Palette oder Rollwagen) in einer vorbestimmten, berechneten räumlichen Anordnung, um einen Stapel von gemischten Verpackungen gemäß einem Auftrag zu bilden.

Das System umfasst
- eine Empfangseinheit 2 zur Aufnahme von Paletten mit Paketen bzw. Artikeln zum Nachschub;
- eine Lagereinheit 3 zur Lagerung der aufgenommenen Paletten;
- mehr als eine Depalettiereinheit 4 zum Depalettieren von Paketen bzw. Artikeln von den empfangenen Paletten, die aus der Lagereinheit stammen;
- mehr als eine Tray-Einheit 5 zum Laden von vereinzelten depalettierten Artikeln auf Trays, wobei jedes Tray einen einzelnen Artikel trägt;
- mindestens eine lineare Sortiereinheit 6 zur Aufnahme aller Trays aus jeder Tray-Einheit mit
   - einem Hauptförderer 8;
   - mehreren Einschleusungen 7, eine von jeder Tray-Einheit 5, die in den Hauptförderer 8 führen;
   - mehreren Ausschleusungen 9 zum Ausschleusen von Trays vom Hauptförderer 8 zu einem Pufferspeicher 10;
- einen Pufferspeicher 10 zur vorübergehenden Lagerung der von den Ausschleusungen 9 bezogenen Trays, die mindestens zwei mehrstöckige, sich in Längsrichtung erstreckende Lagerregale aufweist, die seitlich durch eine Gasse 11 getrennt sind;
- mehr als eine Palettiererzuführung 12, die von Lasthebevorrichtungen mindestens einer Gasse 11 stammen, und jede Palettiererzuführung 12 hat mindestens eine Trayentladeeinheit 13 zum Entladen eines Artikels von einem Tray;
- mehr als eine Palettiereinheit 14 zum Stapeln von gemischten Artikeln auf einer Unterlage in einer vorbestimmten räumlichen Anordnung, um einen Stapel von gemischten Artikeln gemäß einem Verteilauftrag zu bilden, der mit Artikeln von mindestens einer Trayentladeeinheit 13 versorgt wird.

Fertige Auftragspaletten werden zum Palettenauftragsreihenfolgepuffer 15 und dann weiter zum Palettenversandbereich 16 befördert.

In dem Wareneingang der Empfangseinheit 2 findet der Teach-In-Prozess zur Bestimmung der Fördergeschwindigkeitsgruppe der Artikel statt. Das Ergebnis wird dann in der Datenbank hinterlegt.

Die Lagereinheit 3 für die Einlagerung der empfangenen Paletten ist ein Hochregallager, das über Förderer von der Empfangseinheit aus bedient wird und über automatische Regalbediengeräte verfügt, die in den Gängen arbeiten, um Paletten auf der Grundlage von Lagersteuerungsanweisungen ein- und auszulagern.

Entnommene Paletten mit benötigten Artikeln werden zu den dafür vorgesehenen Depalettiereinheiten befördert, wo die Paletten entweder vollautomatisch entschichtet und dann vereinzelt oder manuell unter Maschinenunterstützung entpalettiert und einzeln auf ein Förderband oder direkt auf ein Tray auf dem Förderer gesetzt werden.

Nach der Vereinzelung der Artikel können diese auf Identität (Auslesen des EAN-Codes) und Orientierung überprüft und ggf. durch Dreh- und/oder Kippvorrichtungen neu orientiert werden, bevor sie in die jeweilige Tray-Einheit 5 gelangen.

Dies kann von mindestens einer oder mehreren der folgenden Gruppen A und/oder B durchgeführt werden.

Gruppe A kann enthalten
- vollautomatische Depalettiereinheiten 4A zum Aufschieben und Vereinzeln von Artikeln aus empfangenen Paletten
   oder
- automatisierte manuelle (maschinenunterstützte) Depalettiereinheiten 4B und Vereinzelung von Artikeln von empfangenen Paletten;
   und
- eine oder mehrere Tray-Einheiten 5 zum Laden von vereinzelten depalettierten Artikeln auf Trays, wobei jedes Tray in dieser Ausführungsform einen einzelnen Artikel trägt;

Gruppe B kann eine oder mehrere kombinierte Depalettier- und Tray-Einheiten 4C zum manuellen, maschinenunterstützten Depalettieren von Artikeln von empfangenen Paletten und zum individuellen Laden von vereinzelten Artikeln auf Trays enthalten, so dass jedes Tray nur einen einzigen Artikel trägt (in dieser Ausführungsform). Es ist auch möglich, zwei oder mehr Artikel auf ein Tray zu legen.

In den Tray-Einheiten 5 werden Artikel von einem oberen parallelen und ausgerichteten Förderer auf Trays auf einen synchronisierten, parallelen und ausgerichteten unteren Förderer abgeworfen.

Bei Verwendung von Trays mit zwei Größen verfügt eine solche Tray-Einheit über zwei versetzte Tray-Transportbänder unterhalb des Paketförderers, die es ermöglichen, das Paket entsprechend der Größe auf das jeweilige Tray abzulegen. Bei der Verwendung von Trays in voller und halber Größe wird, wie erläutert, ein Förderer für jede Traygröße eingesetzt.

Durch den Einsatz von Trays in den folgenden Anlagenteilen ist es möglich, einen hohen Durchsatz auf zuverlässige Weise zu erreichen.

Die verwendeten Trays sind zweiteilig aufgebaut, was einen sicheren Transport und eine einfache Entnahme ermöglicht. Sie bestehen aus einem Rahmen und innerhalb dieses Rahmens aus einem beweglichen Boden, wie in DE 10 2008 026 326 A1 beschrieben.

Beim Transport der Artikel zu den Tray-Einheiten 5 (zur Beladung der Trays mit Artikeln) kann bereits eine Vorgruppierung nach der Erkennung anhand der in einer ersten Überwachungseinheit 21 ausgelesenen EAN-Codes und der so aus der Datenbank ermittelten Fördergeschwindigkeitsgruppe stattfinden (siehe oben). Somit landen Artikel mit ähnlicher Fördergeschwindigkeit schon bei denselben Tray-Einheiten 5 und nach der Traybeladung in denselben Induktionslinien bzw. Einschleusungen 7.

Von den Tray-Einheiten 5 werden die mit einem einzelnen Artikel beladenen Trays zu Stau-Einschleusungen 7 geschickt, die dazu dienen, die Trays auf den Hauptförderer 8 der (linearen) Sortiereinheit 6 zu führen. Die Einschleusungen 7 können pro Tray-Einheit (oder kombinierten Depalettier- und Tray-Einheiten) dediziert sein oder auch von Vormischlinien, die von den Tray-Einheiten 5 (oder kombinierten Depalettier- und Tray-Einheiten) kommen, gemeinsam genutzt werden.

Beim Abziehen bzw. Einschleusen der Artikel von den Einschleusungen 7 auf die Sortierstrecke bzw. den vorgelagerten Lückenbildungs-Abschnitt 8A erfolgt ggf. eine endgültige Gruppierung der Artikel zu Gruppen mit derselben Fördergeschwindigkeitsgruppeneinordnung. Somit haben alle Artikel in dem Lückenbildungs-Abschnitt 8A dieselbe maximale Fördergeschwindigkeit und können entsprechend optimal beschleunigt und mit derselben maximalen Fördergeschwindigkeit in den Ausschleusungsabschnitt 8B transportiert und dort gehandhabt werden. Das Steuerungssystem 100 kennt aufgrund der obigen Identifizierung der Artikel und Vorgruppierung die Reihenfolge und Position der Artikel in den Einschleusungen 7 und kann daher die Einschleusung entsprechend so steuern, dass die Artikel aus den verschiedenen Induktionslinien mit derselben Geschwindigkeitseinordnung nacheinander eingeschleust werden, so dass sie hintereinander (im Pulk) auf der Sortierstrecke landen.

Zur Sicherheit kann eine zweite Überwachungseinheit im Einlauf 22 des Lückenbildungs-Abschnitts 8A vorgesehen sein, die die angenommenen Daten mit ausgelesenen EAN-Codes und der Datenbank abgleicht und verifiziert.

Dieser Artikelpulk kann daher mit optimaler Fördergeschwindigkeit zur Sortierung transportiert und ausgeschleust werden.

Nach der Einschleusung gelangen die Trays somit in einen Lückenbildungs-Abschnitt 8A, der so ausgebildet ist, dass die Lücken zwischen den Trays vereinheitlicht werden, was das Ausschleusen im Ausschleusungsabschnitt 8B verbessert.

Die Ausschleusungen 9 im Ausschleusungsabschnitt 8B der Hochgeschwindigkeits-Linearsortiereinheit sind vom Typ Slat und Schuh, wie grundsätzlich in EP 0 484 150 A1 beschrieben.

Hinter den Ausschleusungen 9 ist eine Rückführstrecke 17 angeordnet, um die Wiedereinschleusung von Trays zu ermöglichen, die aufgrund von zu hoher Belastung, Fehlern usw. nicht ausgeschleust wurden.

Diese Rückführstrecke 17 enthält einen Förderer 18, der zurück zu den Stau-Einschleusungen 7 führt.

Um die Weiterleitung von Trays zu diesem Abschnitt, d. h. das Passieren der Ausschleusungen, zu steuern, ist vor den Ausschleusungen in der Tray-Einheit eine Erkennungseinheit zur Detektion falsch dimensionierter Artikel (insbesondere Höhe) installiert. Es ist auch möglich, solche "fehlerhaften" Trays zunächst im Pufferspeicher 10 zu lagern und später an eine ebenfalls in der Rückführstrecke 17 enthaltene Ausschleuseinheit 19 zur Behandlung von Artikeln abzugeben, die (z. B. aufgrund einer fehlgeschlagenen Maßkontrolle) ausgeschleust werden und vor der Einschleusung einer manuellen Nacharbeit oder Bestätigung bedürfen.

Diese Ausschleuseinheit 19 ist daher auch direkt mit den Tray-Einheiten 5 über eine Strecke verbunden und behandelt die im Tray-Prozess ausgeschleusten Artikel.

Nach der Ausschleuseinheit ist eine weitere Erkennungseinheit 20 zur Überprüfung der Abmessungen von nachbearbeiteten Artikeln auf Trays vor dem Wiedereintritt in die Einschleusungen 7 installiert.

Vorliegend werden alle Artikel eines Pulks bzw. einer Fördergeschwindigkeitsgruppe beginnend mit der Einschleusung von der Einschleusungen 7 bis zur Ausschleusung 9 und anschießenden Strecke zum Pufferspeicher 10 mit der Fördergeschwindigkeit basierend auf Kippstabilität gefördert. Sobald die Artikel die Strecke zum Pufferspeicher 10 verlassen haben, beginnt die Steuerung mit anderer Fördergeschwindigkeit basierend auf Kippstabilität der nächsten Artikel bzw. des folgenden Artikelpulks in analoger Weise.

Die Ausschleusungen 9 speisen Strecken, die zum Pufferspeicher 10 führen. Insbesondere speist jede Strecke zwei Eingangslifte 10A derselben Gasse 11 im Pufferspeicher 10. Alternativ kann die Gasse 11 auch von einem einzigen Eingangslift 10A bedient werden.

Der Förderer für den Transport der Trays von den Ausschleusungen 9 zu den genannten Lastaufnahmemitteln ist so ausgeführt, dass er jede Sorterentnahme (Strecke nach der Ausschleusung) mit den beiden Eingangsliften 10A jeder Gasse verbindet. Gleichzeitig ermöglicht dies das Drehen großer Trays von der kurzen Kantenführung zur langen Kantenführung für eine platzsparende Lagerung.

Wenn der Förderer für den Transport von Trays zu einer bestimmten Gasse überlastet ist, kann die Lagerverwaltungssteuerung Trays zu einer alternativen Gasse 11 umleiten, um sie z. B. in eine benachbarten Lagergasse einzuführen.

Falls erforderlich, kann dieses Tray dann zur Zielgasse 11 umgeleitet werden, indem es zwischen den Gängen transportiert wird, wie durch den Pfeil 10C angezeigt.

Der Pufferspeicher 10 umfasst mehrere mehrstöckige, sich in Längsrichtung erstreckende Lagerregale 10B, die seitlich durch eine Gasse 11 getrennt sind.

Der Pufferspeicher 10 hat eingehende und ausgehende Förderverbindungen auf verschiedenen Ebenen und auch auf unterschiedlichen Ebenen für verschiedene Funktionen. Eine Ebene enthält den eingehenden Verkehr zu den Eingangsliften 10A von den Ausschleusungen 9 der Sortiereinheit 6. Eine oder zwei Ebenen enthalten den ausgehenden konsolidierten und sequenzierten Verkehr zu den Palettiereinheiten, je nach Anzahl der Palettiereinheiten. Auf einer weiteren Ebene wird der ausgehende Verkehr abgewickelt, der nicht mit der Palettiereinheit zusammenhängt, d. h. die Handhabung leerer Traystapel.

Das Regallager besteht aus mehreren mehrstöckigen, sich in Längsrichtung erstreckenden doppeltiefen Lagerregalen 10B, die durch eine Gasse 11 getrennt sind. In jeder Ebene erstrecken sich Führungsschienen für Shuttles (als Regalbediengeräte) über die Länge der Gasse und an mindestens zwei Eingangsliften10A vorbei, die jeweils eine heb- und senkbare Transportplattform zum Heben oder Senken von Tablaren aufweisen. Dabei ist jeweils ein Eingangslift 10A in jedem Regal 10B integriert. Die Führungsschienen sind in jeder dieser Ebenen so angeordnet, dass die Shuttles vollständig auf die Lagerregale und jedem Eingangslift zugreifen können, indem die Führungsschienen so angeordnet werden, dass sie sich entlang der Gasse und an den Eingangsliften vorbei erstrecken. Die Shuttles sind so ausgelegt, dass sie die Trays zwischen den Lagerplätzen in den Lagerregalen und den Eingangsliften10A transportieren.

Um dies zu entkoppeln, sind auf einer Seite jedes Eingangslifts10A Wechselpufferförderer angeordnet. Die andere Seite jedes Eingangslifts 10A ist mit einem Förderer für den Transport von Trays zu und von den Eingangsliften verbunden.

Jede Gasse hat vier Lasthebevorrichtungen oder Lifte 10A. Jeweils zwei sind Eingangslifte und zwei sind Ausgangslifte. Die beiden Eingangslifte befinden sich auf gegenüberliegenden Seiten der Gasse 11 und die beiden Ausgangslifte auf der gleichen Seite der Gasse 11. Somit umfahren die Förderer, die an die Ausgangslifte auf derselben Seite der Gasse anschließen, den jeweils anderen Ausgangslift und auch den Eingangslift. Die Förderer sind auf verschiedenen Ebenen der Lagerregale 10B angeordnet.

Die Shuttles sind Einebenen-Shuttles und verfügen über einen Lasthandhabungsbereich, der von Lasthandhabungsvorrichtungen in Form von Teleskoparmen bedient wird, die zu beiden Seiten der Gasse ausfahrbar sind und mehrere Finger umfassen, die zwischen einer eingreifenden und einer nicht eingreifenden Ausrichtung bewegt werden können, um jeweils das/die Tray(s) zum Schieben/Ziehen zu kontaktieren. Die Teleskoparme haben einen doppelt so tiefen und größeren Arbeitsbereich.

Die jeweiligen Führungsschienen stellen nicht nur eine Lauffläche für die Regalbediengeräte dar, sondern können auch der Energieübertragung (z. B. Stromübertragung über Stromabnehmer) und/oder der Übertragung von Steuer- und Informationssignalen (z. B. Übertragung über Stromabnehmer, wobei die Signale dem Strom aufmoduliert werden, siehe EP 2 591 559 A1) dienen.

Der Lastaufnahmemittelbereich der Shuttles ist so dimensioniert, dass er ein großes Vollformat-Tray oder zwei kleine Halbformat-Trays aufnehmen/tragen kann. Beim Transport von zwei Halbtrays können die Lastaufnahmemittel diese beiden Trays gemeinsam, d. h. gleichzeitig, bewegen.

Konstruktionsbedingt ermöglicht das Shuttlelager neben der Pufferung auch eine Auftragskonsolidierung und Sequenzierung.

Das bedeutet, dass alle Artikel für einen bestimmten Auftrag konsolidiert und in speziellen Gängen gelagert werden können, so dass sie dann in einer vorgegebenen Reihenfolge zum Palettierer entladen werden können, um einen optimalen Stapelbau zu ermöglichen.

Die Sequenzierung wird durch die Verwendung der Shuttle- und der Auslagerlifte erreicht, um die Reihenfolge der Pakete auf der Entladeleitung, die in die Palettiererzuführung(en) 12 führt, zu sortieren.

An jede Palettiereinheit 14 sind ein oder zwei Gassen 11 durch die Palettiererzuführung 12 über die Trayentladeeinheit 13 angeschlossen.

Die Trayentladeeinheit 13 enthält außerdem Ausrichtungs- und Orientierungsabschnitte, um die Trays auszurichten und zu orientieren (zu drehen), bevor die eigentliche Entladung stattfindet, was eine Vororientierung der Artikel auf den Trays ermöglicht.

Zum Entladen selbst (Entladen des Artikels aus dem Tray) hebt der Entlader den losen Boden des Trays innerhalb des Rahmens bis auf eine Höhe des Randes an und der Artikel wird seitlich abgeschoben.

Die Trayentladeeinheit 13 umfasst außerdem eine Handhabung leerer Trays. Dazu gehört das Bilden von Stapeln leerer Trays und entweder das Weiterleiten dieser an die Tray-Einheiten oder das Speichern im Pufferspeicher wie oben beschrieben.

Nach der (den) Entnahmeeinheit(en) werden die entladenen Artikel zum (zu den) Palettierer(n) von mehr als einer Palettiereinheit 14 befördert, um gemischte Artikel auf einer Unterlage in einer vorbestimmten räumlichen Anordnung zu stapeln, um einen Stapel gemischter Artikel gemäß einem Auftrag zu bilden.

Die Palettierer 14 selbst sind entweder vollautomatisch oder sind manuell ausgeführt und stellen eine Maschinenunterstützung für den manuellen Vorgang bereit.

Solche vollautomatischen Palettierer können wie in der WO 2014/005895 A1 beschrieben realisiert werden.

Die Reihenfolge der am Palettierer bereitgestellten Artikel wird auf der Grundlage von Auftragsinformationen und Präferenzen (Ladenlayout usw.) vorgegeben und von einem Softwaremodul für die Lagerverwaltung berechnet, das für die virtuelle Konfiguration des endgültigen, zu palettierenden Stapellayouts auf der Grundlage der Artikel im jeweiligen Auftrag zuständig ist.

Die Palettierer 14 enthalten eine Wickeleinheit zur Sicherung der fertigen Paletten für den Transport durch Umwickeln mit Stretchfolie.

Fertige Paletten werden mittels Förderern oder mittels FTS zu einem Versand- und Ladebereich 16 oder alternativ zu einem Pufferbereich 15 gebracht.

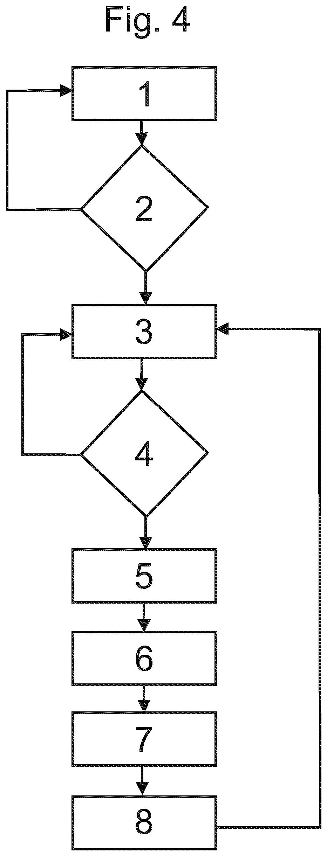

Wie in Figur 4 gezeigt, kann der Ablauf der Gruppierung der Artikel in Fördergeschwindigkeitsgruppen und die Steuerung der Fördergeschwindigkeit der Förderer im System darauf beruhend wie nachfolgend in Schritten beschrieben werden:
1. Beim erstmaligen Einlagern bzw. Anliefern eines neuen Artikels erfolgt ein Teach-In Vorgang zur Bestimmung der Kippstabilität anhand des Kippwinkels auf empirischer Basis. Sollte der Artikel schon bekannt sein, kann darauf verzichtet werden.
   Anhand des so bestimmten Kippstabilitätswerts (Winkel, siehe oben) erfolgt eine Einstufung in eine Fördergeschwindigkeitsgruppe und diese wird zu dem jeweiligen Datenbankeintrag des Artikels abrufbar hinterlegt.
2. Geht ein Artikel im Zwischenlager zur Neige und wird daraufhin ein Nachschub nötig, kann ein Nachschubauftrag zum Auslagern des entsprechenden Artikels in einer benötigten Menge aus dem Nachschublager ausgelöst werden.
3. Dabei erfolgt eine Berücksichtigung der Fördergeschwindigkeitsgruppe der nachzuschiebenden Artikel.
4. Handelt es sich um einen Artikel in einer langsamen Fördergeschwindigkeitsgruppe, weil er zum Kippen neigt, kann beim Nachschieben die Menge erhöht werden, um den Nachschub seltener durchzuführen.
5. Anschließend erfolgt ein Auslagern der entsprechenden Palette aus dem Hochregallager und ein Depalettieren der berechneten Menge des Artikels und ein Fördern zur Tray-Einheit 5 und anschließend ein Einbringen der Artikel auf den Tablaren in dieselbe Einschleusung 7. Somit erfolgt eine Gruppierung von Artikeln mit derselben Fördergeschwindigkeitseingruppierung in die gleiche Einschleusung.
7. Somit können die Trays anschließend hintereinander in die Sortierstrecke eingeschleust werden, wenn diese an der Reihe sind.
8. Daher findet beim Einschleusen von den Einschleusungen 7 in die Sortierstrecke 8 ein Fördern der Gruppe der Artikel mit derselben Fördergeschwindigkeitseingruppierung mit derselben Fördergeschwindigkeit und beim Ausschleusen von den Ausschleusungen 9 sowie auf den Strecken zum Pufferspeicher 10 statt.

Anschließend beginnt das Verfahren erneut.

## Patentansprüche

1. Sortiersystem umfassend eine zentrale Steuerung, eine Sortierstrecke mit variabel steuerbarer Fördergeschwindigkeit, mindestens zwei Zuführstrecken auf den Einlauf in die Sortierstrecke und eine Überwachungseinrichtung im Einlauf, wobei die Überwachungseinrichtung derart ausgestaltet und mit der zentralen Steuerung verbunden ist, dass einlaufende Artikel detektiert und von der zentralen Steuerung zu dem detektierten Artikel eine hinterlegte Geschwindigkeit zur Steuerung der Fördergeschwindigkeit der Sortierstrecke abgefragt und zu deren Steuerung verwendet wird.

2. Sortiersystem nach Anspruch 1, **dadurch gekennzeichnet, dass** die Sortierstrecke hinsichtlich Fördergeschwindigkeit basierend auf Kippstabilität oder anderer zu dem detektierten Artikel hinterlegten Artikeleigenschaften wie Zerbrechlichkeit, Oberflächenbeschaffenheit, Reibwerte, Integrität und Stabilität der Verpackung steuerbar ist.

3. Sortiersystem nach Anspruch 1 oder 2, **dadurch gekennzeichnet, dass** die Sortierstrecke mehrere unabhängig voneinander hinsichtlich Fördergeschwindigkeit steuerbare Sortierabschnitte aufweist.

4. Sortiersystem nach einem der vorhergehenden Ansprüche, **dadurch gekennzeichnet, dass** die Zuführstrecken mit einem Nachschublager verbunden sind, von dem aus die Zuführstrecken mit Artikeln gleicher oder ähnlicher Fördergeschwindigkeit gruppiert versorgt werden.

5. Verfahren zum Betreiben und Steuern eines Sortiersystems mit einer Sortierstrecke, die eine über eine zentrale Steuerung variabel steuerbare Fördergeschwindigkeit aufweist, und mit einer Überwachungseinrichtung für die Sortierstrecke, wobei die Überwachungseinrichtung vor der Sortierstrecke angeordnet ist und einlaufende Artikel detektiert, und die Überwachungseinrichtung das Ergebnis mit der zentralen Steuerung austauscht und diese je nach detektiertem Artikel eine in der zentralen Steuerung hinterlegte Fördergeschwindigkeit zur Steuerung der Fördergeschwindigkeit der Sortierstrecke auf eine solche Fördergeschwindigkeit verwendet, während sich der Artikel darauf befindet.

6. Verfahren nach Anspruch 5, **dadurch gekennzeichnet, dass** Artikel mit ähnlicher oder gleicher hinterlegter Fördergeschwindigkeit gruppiert auf die Sortierstrecke eingeschleust werden.

7. Verfahren nach Anspruch 5 oder 6, **dadurch gekennzeichnet, dass** zur Bestimmung der Fördergeschwindigkeit Produkteigenschaften der Artikel, wie Zerbrechlichkeit, Oberflächenbeschaffenheit, Reibwerte, Integrität und Stabilität der Verpackung und Kippstabilität herangezogen werden.

8. Verfahren nach einem der vorhergehenden Ansprüche 5 bis 7, **dadurch gekennzeichnet, dass** Artikel vor dem Einlauf in die Sortierstrecke in Fördergeschwindigkeitsgruppen sortiert werden.

9. Verfahren nach einem der vorhergehenden Ansprüche 5 bis 8, **dadurch gekennzeichnet, dass** bereits Fördergeschwindigkeitsgruppen beim Bereitstellen von Artikeln aus einem Nachschublager berücksichtigt werden.

10. Verfahren nach einem der vorhergehenden Ansprüche 5 bis 9, **dadurch gekennzeichnet, dass** gleichzeitig mehr Artikel einer Fördergeschwindigkeitsgruppe aus dem Nachschublager bereitgestellt werden, als im Mittel benötigt werden.

11. Verfahren nach einem der vorhergehenden Ansprüche 5 bis 10, **dadurch gekennzeichnet, dass** die Belegung von Zuführstrecken auf die Sortierstrecke derart berücksichtigt wird, dass möglichst Artikel gleicher Fördergeschwindigkeitsgruppen sich auf derselben Zuführstrecke befinden.

12. Verfahren nach einem der vorhergehenden Ansprüche 5 bis 11, **dadurch gekennzeichnet, dass** bei Verwendung von Tablaren der Artikel beim Platzieren auf dem Tablar eine Vorpositionierung des Artikels mittig oder an abgewandter Seite des Sorter-Angriffs erfolgt, so dass der Artikel weniger zum Kippen neigt und wenn dann auf dem Tablar umkippt und nicht herunterfällt.

## Claims

1. Sorting system comprising a central controller, a sorting section with a variably controllable conveying speed, at least two feed sections onto the feed into the sorting section and a monitoring device in the feed, wherein the monitoring device is configured and connected to the central controller such that incoming articles are detected and with respect to the detected article a stored speed for controlling the conveying speed of the sorting section is interrogated by the central controller and used for the control thereof.

2. Sorting system as claimed in claim 1, **characterised in that** the sorting section can be controlled in terms of conveying speed based upon tipping stability or other article properties, such as fragility, surface quality, friction coefficients, integrity and stability of the package, which are stored with respect to the detected article.

3. Sorting system as claimed in claim 1 or 2, **characterised in that** the sorting section has a plurality of sorting portions which can be controlled independently of one another in terms of conveying speed.

4. Sorting system as claimed in any one of the preceding claims, **characterised in that** the feed sections are connected to a replenishment storage, from which the feed sections are supplied in groups with articles of the same or similar conveying speed.

5. Method for operating and controlling a sorting system comprising a sorting section which has a conveying speed which can be variably controlled via a central controller, and comprising a monitoring device for the sorting section, wherein the monitoring device is arranged upstream of the sorting section and detects incoming articles, and the monitoring device exchanges the result with the central controller and, depending upon the detected article, said controller uses a conveying speed, which is stored in the central controller, for controlling the conveying speed of the sorting section to such a conveying speed while the article is located thereon.

6. Method as claimed in claim 5, **characterised in that** articles having a similar or the same stored conveying speed are introduced in a grouped manner onto the sorting section.

7. Method as claimed in claim 5 or 6, **characterised in that**, in order to determine the conveying speed, product properties of the articles, such as fragility, surface quality, friction coefficients, integrity and stability of the package and tipping stability, are used.

8. Method as claimed in any one of the preceding claims 5 to 7, **characterised in that** articles are sorted into conveying speed groups upstream of the feed into the sorting section.

9. Method as claimed in any one of the preceding claims 5 to 8, **characterised in that** conveying speed groups are already taken into account when articles are provided from a replenishment storage.

10. Method as claimed in any one of the preceding claims 5 to 9, **characterised in that** more articles of one conveying speed group are simultaneously provided from the replenishment storage than are required on average.

11. Method as claimed in any one of the preceding claims 5 to 10, **characterised in that** the allocation of feed sections onto the sorting section is taken into account such that, where possible, articles of the same conveying speed groups are located on the same feed section.

12. Method as claimed in any one of the preceding claims 5 to 11, **characterised in that**, when trays are used, the article is pre-positioned centrally or on the far side of the sorter grip when it is placed on the tray, so that the article is less likely to tip over and, if it tips over on the tray, it does not fall off.

## Revendications

1. Système de tri comportant une commande centrale, un chemin de tri à vitesse de transport pouvant être commandé de manière variable, au moins deux chemins d'accès à l'entrée dans le chemin de tri et un dispositif de contrôle à l'entrée, dans lequel le dispositif de contrôle est conformé et relié à la commande centrale de manière à ce qu'un article entrant soit détecté et qu'il soit demandé, par la commande centrale à l'article détecté, une vitesse mise en mémoire de commande de la vitesse de transport du chemin de sortie et soit utilisée pour sa commande.

2. Système de tri suivant la revendication 1, **caractérisé en ce que** le chemin de tri peut être commandé en ce qui concerne la vitesse de transport sur la base de la stabilité au basculement ou d'autres propriétés de l'article mises en mémoire pour l'article détecté, comme la fragilité, les propriétés de surface, des valeurs de frottement, l'intégrité et la stabilité de l'emballage.

3. Système de tri suivant la revendication 1 ou 2, **caractérisé en ce que** le chemin de tri a plusieurs tronçons de tri pouvant être commandés indépendamment des uns des autres en ce qui concerne la vitesse de transport.

4. Système de tri suivant l'une des revendications précédentes, **caractérisé en ce que** les chemins d'accès sont reliés à un magasin d'approvisionnement, par lequel les chemins d'accès sont alimentés de manière groupée en articles de même vitesse de transport ou de vitesse de transport analogue.

5. Procédé pour faire fonctionner et commander un système de tri ayant un chemin de tri, qui a une vitesse de transport pouvant être commandée de manière variable par une commande centrale et comprenant un dispositif de contrôle du chemin de tri, dans lequel le dispositif de contrôle est disposé avant le chemin de tri et détecte des articles entrant et le dispositif de contrôle échange le résultat avec la commande centrale et celle-ci utilise, suivant l'article détecté, une vitesse de transport mise en mémoire dans la commande centrale pour la commande de la vitesse de transport du chemin de tri à une telle vitesse de transport, pendant que l'article s'y trouve.

6. Procédé suivant la revendication 5, **caractérisé en ce que** l'on fait entrer sur le chemin de tri, de manière groupée, des articles ayant une même vitesse de transport mise en mémoire ou une vitesse de transport analogue, mise en mémoire.

7. Procédé suivant la revendication 5 ou 6, **caractérisé en ce que** pour la détermination de la vitesse de transport, on tire parti des propriétés de produits des articles comme de la fragilité, la propriété de surface, des valeurs de frottement, l'intégrité, la stabilité de l'emballage et la stabilité au basculement.

8. Procédé suivant l'une des revendications 5 à 7 précédentes, **caractérisé en ce que** l'on tri des articles avant l'entrée dans le chemin de tri, en des groupes de vitesse de transport.

9. Procédé suivant l'une des revendications 5 à 8 précédentes, **caractérisé en ce qu'**on prend en compte déjà des groupes de vitesse de transport lors de la préparation d'articles sortant d'un magasin d'approvisionnement.

10. Procédé suivant l'une des revendications 5 à 9 précédentes, **caractérisé en ce que** l'on prépare en même temps plus d'articles d'un groupe de vitesse de transport sortant du magasin d'approvisionnement que l'on en a besoin, en moyenne.

11. Procédé suivant l'une des revendications 5 à 10 précédentes, **caractérisé en ce que** l'on prend en compte l'occupation des chemins d'accès au chemin de tri de manière à ce qu'autant que possible, des articles de mêmes groupes de vitesse de transport se trouvent sur le même chemin d'accès.

12. Procédé suivant l'une des revendications 5 à 11 précédentes, **caractérisé en ce que**, lors de l'utilisation de plateaux des articles, lors du placement sur le plateau a lieu un prépositionnement de l'article au milieu ou d'un côté loin de l'attaque de tri, de sorte que l'article tend moins à basculer et même alors bascule sur la table et ne tombe pas.
